# EUROPÄISCHE PATENTSCHRIFT

(11) **EP 4 175 224 B1**
(45) Veröffentlichungstag und Bekanntmachung des Hinweises auf die Patenterteilung: **05.06.2024**
(21) Anmeldenummer: 22203273.2
(22) Anmeldetag: 24.10.2022
(51) Int. Cl.: H04L 69/28, H04L 69/04, H04L 9/40, H04L 67/12, H04W 4/48, H04L 9/32, H04L 12/40

(54) **VERFAHREN UND VORRICHTUNG ZUM BETREIBEN EINER GESICHERTEN DATENKOMMUNIKATION ZWISCHEN FUNKTIONSEINHEITEN FÜR EIN FAHRZEUG**
METHOD AND DEVICE FOR OPERATING A SECURE DATA COMMUNICATION BETWEEN FUNCTIONAL UNITS FOR A VEHICLE
PROCÉDÉ ET DISPOSITIF POUR FAIRE FONCTIONNER UNE COMMUNICATION DE DONNÉES SÉCURISÉE ENTRE DES UNITÉS FONCTIONNELLES POUR UN VÉHICULE

(30) Priorität: 02.11.2021 DE 102021128434
(43) Veröffentlichungstag der Anmeldung: 03.05.2023
(73) Patentinhaber: KNORR-BREMSE Systeme für Nutzfahrzeuge GmbH, 80809 München (DE)
(72) Erfinder: KRÄMER, Christian, 75438 KNITTLINGEN (DE)

(56) Entgegenhaltungen:
- US-A1- 2009 210 707
- US-A1- 2019 018 408
- US-A1- 2021 075 620

## Beschreibung

Die vorliegende Erfindung bezieht sich auf ein Verfahren zum Betreiben einer gesicherten Datenkommunikation zwischen Funktionseinheiten für ein Fahrzeug, auf eine entsprechende Vorrichtung, auf eine Funktionseinheit für ein Fahrzeug und auf ein entsprechendes Computerprogramm.

Herkömmliche Protokolle zur Datenkommunikation sehen beispielsweise vor, dass im Rahmen der Cyber-Security jede Nachricht, die zwischen Einheiten ausgetauscht wird, mit einer Signatur versehen wird. Je mehr Botschaften pro Zeiteinheit übertragen werden sollen, desto höher ist der Ressourcenbedarf. Beispielsweise entsteht für eine CAN-Botschaft mit 8 Byte Nutzdaten bei gängiger AES128-Verschlüsselung eine 16 Byte große Signatur. Damit verdreifacht sich die zu übertragende Datenmenge. Selbst wenn nur ein Teil der Signatur übertragen wird, kann immer noch eine Verdoppelung der Datenmenge realistisch sein.

Vor diesem Hintergrund ist es die Aufgabe der vorliegenden Erfindung, ein verbessertes Verfahren zum Betreiben einer Datenkommunikation zwischen Funktionseinheiten für ein Fahrzeug, eine verbesserte Vorrichtung zum Betreiben einer Datenkommunikation zwischen Funktionseinheiten für ein Fahrzeug, eine verbesserte Funktionseinheit für ein Fahrzeug und ein verbessertes Computerprogramm zu schaffen.

Diese Aufgabe wird durch ein Verfahren zum Betreiben einer Datenkommunikation zwischen Funktionseinheiten für ein Fahrzeug, durch eine Vorrichtung zum Betreiben einer Datenkommunikation zwischen Funktionseinheiten für ein Fahrzeug, durch eine Funktionseinheit für ein Fahrzeug und durch ein Computerprogramm gemäß den Hauptansprüchen gelöst.

Gemäß Ausführungsformen kann insbesondere eine Datenkommunikation zwischen Funktionseinheiten für ein Fahrzeug nach einem Kommunikationsprotokoll für nachrichtenauthentifizierte Kommunikation betrieben werden, wobei eine regelmäßige Datenkommunikation, beispielsweise eines Sensorsignals, von einer Errechnung, Sendung und optional Prüfung einer zugehörigen Signatur getrennt erfolgen kann. Die Datenkommunikation kann beispielsweise bei einer Kommunikation zwischen Steuergeräten und zusätzlich oder alternativ für eine Sensorkommunikation zum Einsatz kommen. Gemäß Ausführungsformen kann insbesondere das Zeitfenster der System-Fehlertoleranzzeit genutzt werden, um Daten bzw. Datenpakete über einen Zeitraum zu sammeln, für die gesammelten Daten eine gemeinsame Signatur zu bestimmen und diese zu senden.

Vorteilhafterweise kann gemäß Ausführungsformen insbesondere ein ressourceneffizientes Kommunikationsprotokoll für nachrichtenauthentifizierte Kommunikation bereitgestellt werden. Wenn gemäß Ausführungsformen beispielsweise nicht jede Botschaft, d. h. jedes Datenpaket, individuell durch eine Signatur geschützt wird, so können für jede Botschaft Rechenaufwand zur Errechnung der Signatur und Übertragungsaufwand zum Senden der Signatur eingespart werden. Somit können insbesondere Grenzen vorhandener Ressourcen, z. B. Übertragungskapazität, Rechenleistung etc., eingehalten werden. Anders als bei herkömmlichen Protokollen, bei denen eine individuelle Signatur für jede übertragene Botschaft verwendet wird, um sofort eine Attacke erkennen zu können, wobei ein Empfänger nach Empfang einer Botschaft die Attacke erkennen kann, kann gemäß Ausführungsformen beispielsweise ausgenutzt werden, dass es im Automobilbereich ausreichend ist, einen potentiellen Angriff innerhalb einer Fehlertoleranzzeit des Systems zu erkennen. Gemäß Ausführungsformen kann insbesondere dieser zusätzliche Zeitraum der System-Fehlertoleranzzeit ausgenutzt werden, um einen Ressourcenbedarf für die Signatur zu reduzieren.

Es wird ein Verfahren zum Betreiben einer Datenkommunikation zwischen Funktionseinheiten für ein Fahrzeug vorgestellt, wobei das Verfahren folgende Schritte aufweist:
Sammeln einer vordefinierten Anzahl von durch eine Sendeeinheit an eine Empfangseinheit ausgesandten Datenpaketen in einem Datenpuffer der Sendeeinheit, um einen Datenblock zu erzeugen, wobei in jedem vordefinierten Zeitschritt ein Datenpaket ausgesandt wird, wobei die Datenpakete über eine vordefinierte, die Summe der Zeitschritte der vordefinierten Anzahl von Datenpaketen des Datenblocks andauernde Sammelzeitdauer hinweg gesammelt werden;
Bestimmen einer Signatur zum Authentifizieren des Datenblocks, wobei die Signatur über eine vordefinierte, mehrere Zeitschritte andauernde Bestimmungszeitdauer hinweg bestimmt wird; und
Senden der Signatur in mehreren Teilen über eine vordefinierte Sendezeitdauer hinweg von der Sendeeinheit an die Empfangseinheit, wobei pro Zeitschritt ein Teil der Signatur gesendet wird,
wobei der Schritt des Sammelns, der Schritt des Bestimmens und der Schritt des Sendens so ausgeführt werden, dass eine Summe der Sammelzeitdauer, der Bestimmungszeitdauer und der Sendezeitdauer kleiner als eine vorgegebene System-Fehlertoleranzzeit ist.

Bei dem Fahrzeug kann es sich um ein Kraftfahrzeug handeln, beispielsweise um einen Personenkraftwagen, einen Lastkraftwagen oder ein anderes Nutzfahrzeug. Die Funktionseinheiten können mindestens eine Sendeeinheit und mindestens eine Empfangseinheit aufweisen. Ein Steuergerät oder ein Sensor des Fahrzeugs kann als eine Sendeeinheit ausgeführt sein oder fungieren. Ferner kann ein weiteres Steuergerät oder ein weiterer Sensor des Fahrzeugs als eine Empfangseinheit ausgeführt sein oder fungieren. Sendeeinheit und Empfangseinheit können datenübertragungsfähig miteinander verbindbar oder verbunden sein. Jedes Datenpaket kann Sensordaten, Steuerdaten oder dergleichen repräsentieren. Beispielsweise kann ein Steuersignal, ein Sensorsignal oder dergleichen in die Datenpakete unterteilt ausgesendet werden. Das Verfahren kann auch einen Schritt des Aussendens der vordefinierten Anzahl von Datenpaketen an eine Empfangseinheit aufweisen. Die System-Fehlertoleranzzeit kann durch Spezifikationen der Datenkommunikation, eines Datenübertragungsweges und zusätzlich oder alternativ einer oder mehrerer der Funktionseinheiten gegeben sein. Das Zeitfenster der System-Fehlertoleranzzeit kann dadurch definiert sein, wie lange ein System einen potentiellen Angriff tolerieren kann, ohne einen sicherheitskritischen Zustand zu erlangen. Beispielsweise kann es tolerierbar sein, dass eine Signaländerung eines Sensors bis zu 300 Millisekunden durch einen Angriff unterdrückt wird, wenn innerhalb dieses Zeitfensters der Angriff erkannt und in einen sicheren Zustand geschalten werden kann. Störungen der Datenkommunikation an sich können mittels End-to-End-Schutzmaßnahmen unabhängig von einer Nachrichtenauthentifizierung erkannt werden.

Gemäß einer Ausführungsform können der Schritt des Sammelns, der Schritt des Bestimmens und der Schritt des Sendens so ausgeführt werden, dass eine Summe aus der Sammelzeitdauer und der Bestimmungszeitdauer kleiner oder gleich einer Summe aus der Bestimmungszeitdauer und der Sendezeitdauer ist. Eine solche Ausführungsform bietet den Vorteil, dass durch Auslegung der Anzahl der Zeitschritte von Sammelzeitdauer, Bestimmungszeitdauer und Sendezeitdauer eine Reaktionszeit auf einen potentiellen Angriff an die gegebene System-Fehlertoleranzzeit angepasst werden kann.

Auch können der Schritt des Sammelns, der Schritt des Bestimmens und der Schritt des Sendens so ausgeführt werden, dass eine Summe aus der Bestimmungszeitdauer und der Sendezeitdauer kleiner als das Zweifache der Sammelzeitdauer ist. Eine solche Ausführungsform bietet den Vorteil, dass durch Auslegung der Anzahl der Zeitschritte von Sammelzeitdauer, Bestimmungszeitdauer und Sendezeitdauer eine Reaktionszeit auf einen potentiellen Angriff an die gegebene System-Fehlertoleranzzeit angepasst werden kann.

Ferner können der Schritt des Bestimmens und der Schritt des Sendens so ausgeführt werden, dass die Bestimmungszeitdauer und die Sendezeitdauer gleich lang sind. Eine solche Ausführungsform bietet den Vorteil, dass durch Auslegung der Anzahl der Zeitschritte von Sammelzeitdauer, Bestimmungszeitdauer und Sendezeitdauer eine Reaktionszeit auf einen potentiellen Angriff an die gegebene System-Fehlertoleranzzeit angepasst werden kann.

Alternativ können der Schritt des Bestimmens und der Schritt des Sendens so ausgeführt werden, dass die Bestimmungszeitdauer und die Sendezeitdauer unterschiedlich lang sind. Eine solche Ausführungsform bietet den Vorteil, dass durch Auslegung der Anzahl der Zeitschritte von Sammelzeitdauer, Bestimmungszeitdauer und Sendezeitdauer eine Reaktionszeit auf einen potentiellen Angriff an die gegebene System-Fehlertoleranzzeit angepasst werden kann.

Zudem können der Schritt des Sammelns, der Schritt des Bestimmens und der Schritt des Sendens so ausgeführt werden, dass die Bestimmungszeitdauer höchstens so lang wie die Sammelzeitdauer ist und zusätzlich oder alternativ die Sendezeitdauer höchstens so lang wie die Sammelzeitdauer ist. Eine solche Ausführungsform bietet den Vorteil, dass durch Auslegung der Anzahl der Zeitschritte von Sammelzeitdauer, Bestimmungszeitdauer und Sendezeitdauer eine Reaktionszeit auf einen potentiellen Angriff an die gegebene System-Fehlertoleranzzeit angepasst werden kann.

Gemäß einer Ausführungsform können im Schritt des Sendens die Signatur für einen bereits versendeten Datenblock und der aktuelle Datenblock gemeinsam gesendet werden. Hierbei kann pro Zeitschritt ein Teil der Signatur zusammen mit mindestens einem der Datenpakete des Datenblocks verschränkt gesendet werden. Eine solche Ausführungsform bietet den Vorteil, dass auch ein sogenannter Replay-Angriff bereits innerhalb der Sendezeitdauer zuzüglich der Prüfdauer der Signatur im Empfänger erkennbar sein kann. Die Zeitdauer zwischen Erstellung der Daten bis zur Authentifizierung der Daten im Empfänger ist hiervon nicht berührt bleibt somit unverändert. Trotz gemeinsamer Übertragung von Daten und Signatur können diese beiden Elemente zeitlich entkoppelt sein. Die Signatur kann für einen bereits zuvor gesendeten Datenblock vorgesehen sein. Somit kann eine Botschaft gesendet werden, womit es einem Angreifer erschwert wird, nur einen Teil zu manipulieren, z. B. die Nutzdaten.

Es können im Schritt des Sendens die Signatur und ein Datenpaket gesendet werden, wobei pro Zeitschritt ein Teil der Signatur bestimmt über den Datenblock zusammen mit einem Datenpaket gesendet werden kann.

Auch können der Schritt des Sammelns, der Schritt des Bestimmens und der Schritt des Sendens zyklisch wiederholt ausgeführt werden. Dabei können über eine vordefinierte weitere Sammelzeitdauer hinweg weitere Datenpakete gesammelt werden, um einen weiteren Datenblock zu erzeugen, wobei über eine vordefinierte weitere Bestimmungszeitdauer hinweg eine weitere Signatur zum Authentifizieren des weiteren Datenblocks bestimmt werden kann, wobei während einer vordefinierten weiteren Sendezeitdauer die weitere Signatur in mehreren Teilen von der Sendeeinheit an die Empfangseinheit gesendet werden kann. Anders ausgedrückt können bei einer zyklisch wiederholten Ausführung im Schritt des Sammelns über eine vordefinierte weitere Sammelzeitdauer hinweg weitere Datenpakete gesammelt werden, um einen weiteren Datenblock zu erzeugen, kann im Schritt des Bestimmens über eine vordefinierte weitere Bestimmungszeitdauer hinweg eine weitere Signatur zum Authentifizieren des weiteren Datenblocks bestimmt werden und kann im Schritt des Sendens während einer vordefinierten weiteren Sendezeitdauer die weitere Signatur in mehreren Teilen von der Sendeeinheit an die Empfangseinheit gesendet werden. Der Schritt des Sammelns, der Schritt des Bestimmens und der Schritt des Sendens können hierbei in Reihe, seriell oder sequenziell ausgeführt werden. Eine solche Ausführungsform bietet den Vorteil, dass eine effiziente Authentifizierung einer beliebigen Menge an Daten realisiert werden kann.

Gemäß einer Ausführungsform können der Schritt des Sammelns, der Schritt des Bestimmens und der Schritt des Sendens so ausgeführt werden, dass die weitere Sammelzeitdauer direkt auf die Sammelzeitdauer folgt und zusätzlich oder alternativ die weitere Sammelzeitdauer die Bestimmungszeitdauer zeitlich überlappt und zusätzlich oder alternativ die Sendezeitdauer partiell zeitlich überlappt. Alternativ kann die weitere Sammelzeitdauer nach einer Zwischenzeitdauer auf die Sammelzeitdauer folgen. Wenn zwei Zeitdauern zeitlich überlappen oder partiell zeitlich überlappen, bedeutet dies, dass ein überlappender Zeitbereich existiert, in dem beide Zeitdauern parallel ablaufen. Eine solche Ausführungsform bietet den Vorteil, dass die Schritte des Verfahrens auch zumindest teilweise zeitlich parallel ausgeführt werden können, wobei somit unterschiedliche Datenblöcke verarbeitet werden können.

Das Verfahren kann zusätzlich zu den bereits genannten sendeseitigen Schritten, die auf Seiten der Sendeeinheit ausführbar sein können, auch empfangsseitige Schritte aufweisen, die auf Seiten der Empfangseinheit ausführbar sein können. Nach Übermittlung der Signatur kann die Empfangseinheit für eine Gruppe von empfangenen Datenpaketen, d. h. den Datenblock, die Authentizität feststellen. Dazu kann die Empfangseinheit empfangene Datenpakete puffern, bis die Signatur gesendet wurde. Die zwischenzeitlich empfangenen Datenpakete können gefahrlos genutzt werden, sofern innerhalb der System-Fehlertoleranzzeit die Signatur geprüft und Gegenmaßnahmen für einen erkannten Angriff ausgeführt werden können.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein flüchtiger Speicher, ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird auch eine Funktionseinheit für ein Fahrzeug vorgestellt, wobei die Funktionseinheit eine Ausführungsform einer hierin genannten Vorrichtung aufweist, wobei die Funktionseinheit als ein Steuergerät oder als ein Sensor oder als ein Aktor ausgeführt ist.

Die Funktionseinheit kann hierbei in dem Fahrzeug montierbar oder montiert sein oder anders ausgedrückt als ein Teil des Fahrzeugs ausgeführt sein. Das Fahrzeug kann mindestens eine Funktionseinheit umfassen, die eine Ausführungsform der hierin genannten Vorrichtung aufweist.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit Funktionseinheiten und einem Ausführungsbeispiel einer Vorrichtung zum Betreiben einer Datenkommunikation;
Fig. 2 ein Ablaufdiagramm eines Ausführungsbeispiels eines Verfahrens zum Betreiben einer Datenkommunikation zwischen Funktionseinheiten für ein Fahrzeug; und
Fig. 3 ein schematisches Zeitablaufdiagramm für das Verfahren aus Fig. 2.

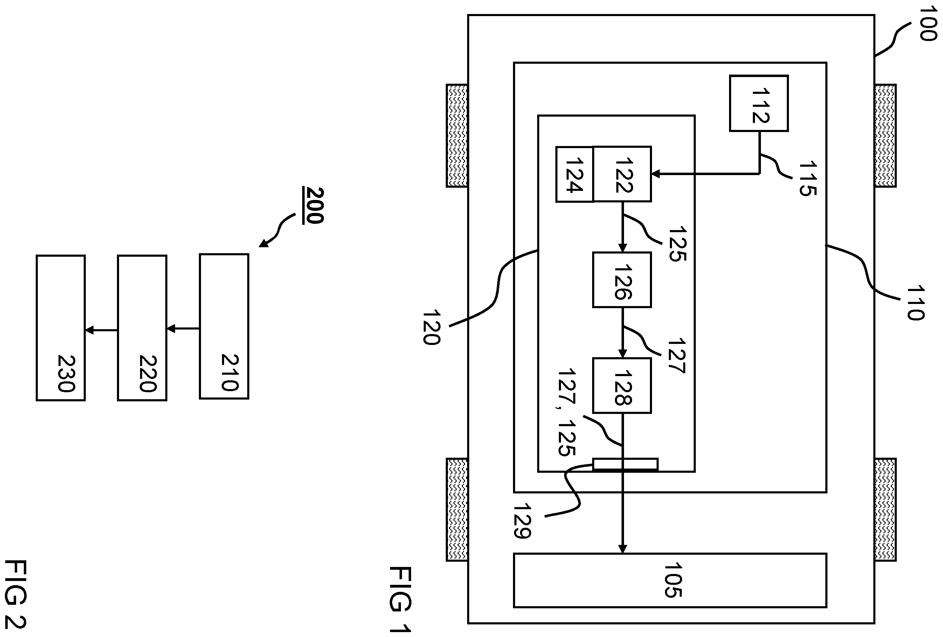

**Fig. 1** zeigt eine schematische Darstellung eines Fahrzeugs 100 mit Funktionseinheiten 105, 110 und einem Ausführungsbeispiel einer Vorrichtung 120 zum Betreiben einer Datenkommunikation. Bei dem Fahrzeug 100 handelt es sich um ein Kraftfahrzeug, beispielsweise einen Personenkraftwagen, ein Motorrad, ein Elektrofahrrad, einen Lastkraftwagen oder ein anderes Nutzfahrzeug. Von dem Fahrzeug 100 sind in der Darstellung von Fig. 1 beispielhaft lediglich eine als Empfangseinheit fungierende erste Funktionseinheit 105 und eine als Sendeeinheit fungierende zweite Funktionseinheit 110 gezeigt. Die erste Funktionseinheit 105 ist beispielsweise als ein Steuergerät oder als ein Sensor ausgeführt. Die zweite Funktionseinheit 110 ist beispielsweise als ein Steuergerät oder als ein Sensor ausgeführt. Die erste Punktionseinheit 105 und die zweite Funktionseinheit 110 sind datenübertragungsfähig miteinander verbunden.

Die zweite Funktionseinheit 110 weist eine Vorrichtung 120 zum Betreiben einer Datenkommunikation zwischen den Funktionseinheiten 105 und 110 auf. Die Vorrichtung 120 umfasst eine Sammeleinrichtung 122, einen Datenpuffer 124, eine Bestimmungseinrichtung 126 und eine Sendeeinrichtung 128. Die zweite Funktionseinheit 110 weist auch eine Aussendeeinrichtung 112 auf. Die Aussendeeinrichtung 112 ist ausgebildet, um Datenpakete 115 über die Vorrichtung 120 an die als Empfangseinheit fungierende erste Funktionseinheit 105 auszusenden. Dabei ist die Aussendeeinrichtung 112 ausgebildet, um in jedem vordefinierten Zeitschritt ein Datenpaket 115 auszusenden. Die Datenpakete 115 sind beispielsweise Abschnitte eines Steuersignals, eines Sensorsignals oder dergleichen.

Die Sammeleinrichtung 122 der Vorrichtung 120 ist ausgebildet, um eine vordefinierte Anzahl der ausgesandten Datenpakete 115 in dem Datenpuffer 124 zu sammeln, um einen Datenblock 125 zu erzeugen. Die Sammeleinrichtung 122 ist ausgebildet, um die Datenpakete 115 über eine vordefinierte, die Summe der Zeitschritte der vordefinierten Anzahl von Datenpaketen 115 des Datenblocks 125 andauernde Sammelzeitdauer hinweg zu sammeln. Anders ausgedrückt umfasst die Sammelzeitdauer eine Anzahl von Zeitschritten, die gleich der vordefinierten Anzahl von Datenpaketen ist. Die vordefinierte Anzahl der Datenpakete 115, aus welchen der Datenblock 125 erzeugt wird, ist durch eine Größe des Datenpuffers 124 bestimmt. Der aus den gesammelten Datenpaketen 115 erzeugte Datenblock 115 umfasst die einzelnen ausgesendeten Nachrichten bzw. Datenpakete 115, beispielsweise wenn ein neues Sensorsignal verfügbar ist.

Die Bestimmungseinrichtung 126 der Vorrichtung 120 ist ausgebildet, um eine Signatur 127 zum Authentifizieren des Datenblocks 125 zu bestimmen. Dabei ist die Bestimmungseinrichtung 126 ausgebildet, um die Signatur 127 über eine vordefinierte, mehrere Zeitschritte andauernde Bestimmungszeitdauer hinweg zu bestimmen. Die Bestimmungseinrichtung 126 ist beispielsweise ausgebildet, um zum Bestimmen der Signatur 127 eine Bestimmungsvorschrift zu verwenden.

Die Sendeeinrichtung 128 der Vorrichtung 120 ist ausgebildet, um die Signatur 127 in mehreren Teilen über eine vordefinierte Sendezeitdauer über eine Schnittstelle 129 der Vorrichtung 120 an die Empfangseinheit 105 zu senden. Dabei ist die Sendeeinrichtung 128 ausgebildet, um pro Zeitschritt einen Teil der Signatur 127 zu senden.

Die Sammeleinrichtung 122, die Bestimmungseinrichtung 126 und die Sendeeinrichtung 128 sind ausgebildet, um die Sammelzeitdauer, die Bestimmungszeitdauer und die Sendezeitdauer derart einzustellen, dass eine Summe der Sammelzeitdauer, der Bestimmungszeitdauer und der Sendezeitdauer kleiner als eine vorgegebene System-Fehlertoleranzzeit ist.

Gemäß einem Ausführungsbeispiel ist die Sendeeinrichtung 128 ausgebildet, um die Signatur 127 und den Datenblock 125 zu senden. Hierbei ist die Sendeeinrichtung 128 ausgebildet, um pro Zeitschritt eine Teil der Signatur 127 zusammen mit mindestens einem der Datenpakete 115 des Datenblocks 125 zu senden.

**Fig. 2** zeigt ein Ablaufdiagramm eines Ausführungsbeispiels eines Verfahrens 200 zum Betreiben einer Datenkommunikation zwischen Funktionseinheiten für ein Fahrzeug. Das Verfahren 200 zum Betreiben ist Verbindung mit bzw. unter Verwendung von der Vorrichtung aus Fig. 1 oder einer ähnlichen Vorrichtung ausführbar. Das Verfahren 200 zum Betreiben umfasst einen Schritt 210 des Sammelns, einen Schritt 220 des Bestimmens und einen Schritt 230 des Sendens.

In dem Schritt 210 des Sammelns wird eine vordefinierte Anzahl von durch eine Sendeeinheit an eine Empfangseinheit ausgesandten Datenpaketen in einem Datenpuffer der Sendeeinheit gesammelt bzw. gepuffert, um einen Datenblock zu erzeugen. In jedem vordefinierten Zeitschritt wird ein Datenpaket ausgesandt. Die Datenpakete werden über eine vordefinierte, die Summe der Zeitschritte der vordefinierten Anzahl von Datenpaketen des Datenblocks andauernde Sammelzeitdauer hinweg gesammelt. Nachfolgend wird in dem Schritt 220 des Bestimmens eine Signatur zum Authentifizieren des Datenblocks bestimmt. Dabei wird die Signatur über eine vordefinierte, mehrere Zeitschritte andauernde Bestimmungszeitdauer hinweg bestimmt. Wiederum nachfolgend wird in dem Schritt 230 des Sendens die Signatur in mehreren Teilen über eine vordefinierte Sendezeitdauer hinweg von der Sendeeinheit an die Empfangseinheit gesendet. Dabei wird pro Zeitschritt ein Teil der Signatur gesendet.

Der Schritt 210 des Sammelns, der Schritt 220 des Bestimmens und der Schritt 230 des Sendens werden hierbei so ausgeführt, dass eine Summe der Sammelzeitdauer, der Bestimmungszeitdauer und der Sendezeitdauer kleiner als eine vorgegebene Fehlertoleranzzeit für die Datenkommunikation ist.

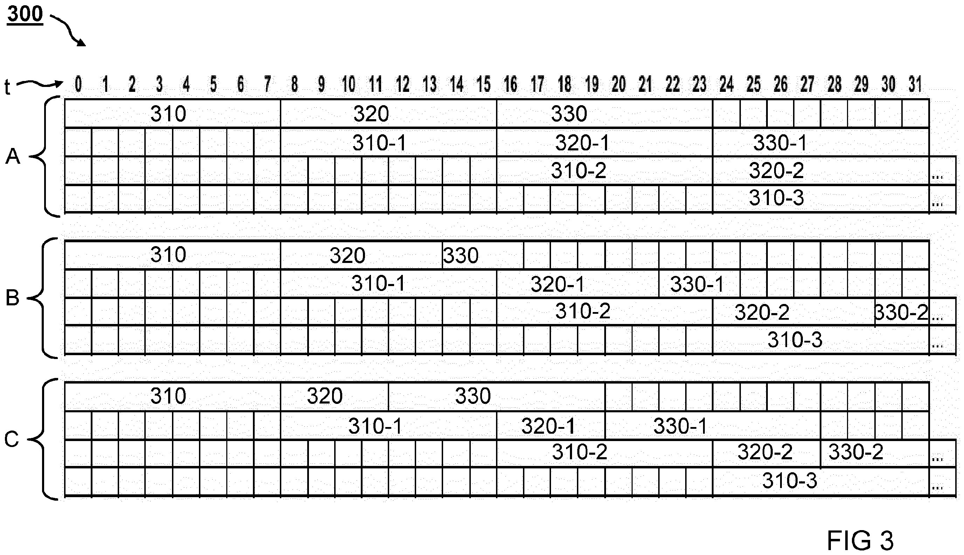

**Fig. 3** zeigt ein schematisches Zeitablaufdiagramm 300 für das Verfahren aus Fig. 2 oder ein ähnliches Verfahren. Gezeigt sind ein erstes Beispiel A, ein zweites Beispiel B und ein drittes Beispiel C für einen zeitlichen Ablauf der Ausführung der Schritte des Verfahrens aus Fig. 2 entlang einer Zeitachse, an der die vordefinierten Zeitschritte t, zum Beispiel 10 ms, aufgetragen sind, wobei lediglich ein erster Zeitschritt 0 bis zweiunddreißigster Zeitschritt 31 dargestellt sind. Für jedes der Beispiele A bis C sind die Sammelzeitdauer 310, die Bestimmungszeitdauer 320 und die Sendezeitdauer 330 sowie weitere Sammelzeitdauern 310-1, 310-2, 310-3, weitere Bestimmungszeitdauern 320-1, 320-2 und weitere Sendezeitdauern 330-1, 330-2 unterschiedlicher, aufeinanderfolgender Durchläufe einer wiederholten Ausführung der Verfahrensschritte eingezeichnet. Insbesondere sind bei allen Beispielen A bis C die Sammelzeitdauern 310, 310-1, 310-2, 310-3 gleich lang, lediglich beispielhaft 8 Zeitschritte t.

Für das Verfahren aus Fig. 2 und somit für die Beispiele A bis C in Fig. 3 gilt ferner folgendes: Der Schritt des Sammelns, der Schritt des Bestimmens und der Schritt des Sendens sind zyklisch wiederholt ausführbar, insbesondere mehrfach wiederholt, wobei über eine vordefinierte weitere Sammelzeitdauer 310-1 / 310-2 / 310-3 hinweg weitere Datenpakete gesammelt werden, um einen weiteren Datenblock zu erzeugen, wobei über eine vordefinierte weitere Bestimmungszeitdauer 320-1 / 320-2 hinweg eine weitere Signatur zum Authentifizieren des weiteren Datenblocks bestimmt wird, wobei während einer vordefinierten weiteren Sendezeitdauer 330-1 / 330-2 die weitere Signatur in mehreren Teilen von der Sendeeinheit an die Empfangseinheit gesendet wird. Gemäß dem hier dargestellten Ausführungsbeispiel werden die Verfahrensschritte unter Verwendung von über die unterschiedlichen Durchläufe der wiederholten Ausführung gleichbleibenden Zeitdauern ausgeführt.

Dabei sind der Schritt des Sammelns, der Schritt des Bestimmens und der Schritt des Sendens so ausführbar, dass die weitere Sammelzeitdauer 310-1 direkt auf die Sammelzeitdauer 310 bzw. das Nachrichtendaten-Sammelzeitfenster folgt. Auch sind der Schritt des Sammelns, der Schritt des Bestimmens und der Schritt des Sendens so ausführbar, dass die weitere Sammelzeitdauer 310-1 die Bestimmungszeitdauer 320 bzw. ein Signaturbestimmungszeitfenster zeitlich überlappt, beispielsweise zwischen dem neunten und dem sechzehnten Zeitschritt bei dem ersten Beispiel A, zwischen dem neunten und dem vierzehnten Zeitschritt bei dem zweiten Beispiel B und zwischen dem neunten und dem zwölften Zeitschritt bei dem dritten Beispiel C, und optional zusätzlich die Sendezeitdauer 330 bzw. ein Signatursendezeitfenster partiell zeitlich überlappt, beispielsweise zwischen dem fünfzehnten und dem sechzehnten Zeitschritt bei dem zweiten Beispiel B und zwischen dem dreizehnten und dem sechzehnten Zeitschritt bei dem dritten Beispiel C. Der Schritt des Sammelns, der Schritt des Bestimmens und der Schritt des Sendens sind zudem so ausführbar, dass eine Summe aus der Sammelzeitdauer 310 und der Bestimmungszeitdauer 320 kleiner oder gleich einer Summe aus der Bestimmungszeitdauer 320 und der Sendezeitdauer 330 ist. Auch sind der Schritt des Sammelns, der Schritt des Bestimmens und der Schritt des Sendens so ausführbar, dass eine Summe aus der Bestimmungszeitdauer 320 und der Sendezeitdauer 330 kleiner als das Zweifache der Sammelzeitdauer 310 ist. Ferner sind der Schritt des Sammelns, der Schritt des Bestimmens und der Schritt des Sendens so ausführbar, dass die Bestimmungszeitdauer 320 höchstens so lang wie die Sammelzeitdauer 310 ist und/oder die Sendezeitdauer 330 höchstens so lang wie die Sammelzeitdauer 310 ist. Die Aussagen dieses Absatzes gelten auch entsprechend für jeweilige Zeitdauern anderer Durchläufe der wiederholten Ausführung der Verfahrensschritte.

Für das erste Beispiel A in Fig. 3 gilt, dass der Schritt des Bestimmens und der Schritt des Sendens so ausgeführt werden, dass die Bestimmungszeitdauer 320 und die Sendezeitdauer 330 gleich lang sind. Ferner sind hierbei die Sammelzeitdauer 310, die Bestimmungszeitdauer 320 und die Sendezeitdauer 330 gleich lang. Gleichermaßen gilt für die Zeitdauern anderer Durchläufe der wiederholten Ausführung der Verfahrensschritte, dass gemäß dem ersten Beispiel A alle Zeitdauern gleich lang sind.

Für das zweite Beispiel B und das dritte Beispiel C in Fig. 3 gilt, dass der Schritt des Bestimmens und der Schritt des Sendens so ausgeführt werden, dass die Bestimmungszeitdauer 320 und die Sendezeitdauer 330 unterschiedlich lang sind. Im Fall des zweiten Beispiels B ist die Bestimmungszeitdauer 320 mit 6 Zeitschritten t länger als die Sendezeitdauer 330 mit 3 Zeitschritten t. Im Fall des dritten Beispiels C ist die Bestimmungszeitdauer 320 mit 4 Zeitschritten t kürzer als die Sendezeitdauer 330 mit 8 Zeitschritten t. Entsprechendes gilt gleichermaßen jeweils für die Zeitdauern anderer Durchläufe der wiederholten Ausführung der Verfahrensschritte.

Unter Bezugnahme auf die vorstehend beschriebenen Figuren werden nachfolgend Ausführungsbeispiele sowie Vorteile von Ausführungsbeispielen nochmals zusammenfassend und mit anderen Worten kurz erläutert.

Das Aussenden bzw. die Kommunikation des Sensorsignals in Gestalt der Datenpakete 115 durch die Aussendeeinrichtung 112 erfolgt wie bekannt zyklisch in jedem Zeitschritt, z. B. alle 10 ms mit Prüfsumme, beispielsweise wie im Rahmen der ISO26262 praktiziert. Zur Authentifizierung der ausgesendeten Datenpakete 115 werden nachfolgende Schritte je über einen Zeitraum von mehreren Zeitschritten t ausgeführt:
1. Die ausgesendeten Sensorwerte bzw. Datenpakete 115 werden zusätzlich in einem Datenpuffer 124 gesammelt.
2. Ist der Datenpuffer 124 gefüllt, wird wiederum, verteilt über mehrere Zeitschritte t, die Signatur 127 über die Datenpakete 115 des Datenblocks 125 bestimmt bzw. berechnet.
3. Die Signatur 127 wird, ebenfalls über mehrere Zeitschritte t verteilt, stückweise an den Empfänger gesendet. Dieser Ablauf ist so ausgerichtet, dass die vorstehend genannten drei Schritte zum einen serialisiert über mehrere Zeitschritte t, als auch parallel innerhalb eines Zeitschrittes t, mit reduziertem Ressourcenbedarf, ausgeführt werden können. Siehe hierzu auch das erste Beispiel A in Fig. 3. Damit wird immer parallel ein Datenpuffer 124 gefüllt, die Signatur 127 über den Inhalt eines zuvor gefüllten Datenpuffers 124, d.h. den Datenblock 125, bestimmt und eine Signatur 127 gesendet. Durch Auslegung der Anzahl der Zeitschritte t zur Pufferung der Daten bzw. zum Sammeln der Datenpakete 115, zur Signaturberechnung bzw. zum Bestimmen der Signatur 127 und zum Senden der Signatur 127 kann die Reaktionszeit auf einen Angriff an die Fehlertoleranzzeit des Systems angepasst werden, siehe hierzu beispielsweise auch das zweite Beispiel B und das dritte Beispiel C in Fig. 3.

Insbesondere zur Verkürzung der Erkennungszeit eines einfachen Replay-Angriffs kann gemäß einem Ausführungsbeispiel die Signatur 127 mit den zu schützenden Daten, d.h. den Datenpaketen 115 des Datenblocks 125, gemeinsam bzw. in der gleichen Botschaft gesendet werden. Die Erkennungszeit für Replay-Attacken ist dann gleich lang wie die Sendezeitdauer 330 zuzüglich der Zeit für die Prüfung der Signatur im Empfänger. Die Erkennungszeit für nichtauthentifizierte Daten ist gleich lang wie die Summe aus der Sammelzeitdauer 310, der Bestimmungszeitdauer 320 und der Sendezeitdauer 330.

Es wird gemäß Ausführungsbeispielen beispielsweise verglichen mit MAC (Message Authentification Code) insbesondere nur ein Bruchteil der Rechen- und Übertragungskapazität benötigt, entsprechend dem Verhältnis zwischen der zyklischen Botschaftsübertragung und der Menge an gesammelten Daten. Werden beispielsweise 8 Datenpakete von Sensordaten gemeinsam signiert, so sinkt der Ressourcenbedarf um den Faktor 8 im Vergleich zu einer individuellen Signatur von jedem Datenpaket. Damit ist es möglich, Anforderungen an eine authentifizierte Kommunikation im Rahmen der Cyber-Security auch mit günstigen Steuergeräten und leistungsschwachen Kommunikationsverbindungen, z. B. serieller Kommunikation, SENT, PSI, etc., zuverlässig zu erfüllen. Ebenfalls kann so vermieden werden, teurere und/oder fehleranfälligere Kommunikationsbusse wie CAN-FD oder Ethernet einzusetzen, um die zusätzlichen Signaturdaten übertragen zu können.

Eine mögliche Einsparung der Rechen- und Übertragungskapazität durch Ausführungsbeispiele sei auch kurz am Beispiel eines intelligenten Sensors eines Fahrzeugs erläutert. Beispielsweise wird ein preisgünstiger, langsam getakteter 16bit Microcontroller zur Sensordatenaufbereitung und eine robuste serielle Schnittstelle mit niedriger Übertragungsgeschwindigkeit zur Sensordatenübertragung verwendet. Hierbei beträgt eine Task-Zykluszeit t zur Aufbereitung und Übertragung der Sensordaten beispielsweise 10ms. Ohne Datenpufferung bzw. Datensammlung und mit einer AES 128 Signatur, wobei Sensordaten alle 10ms aufbereitet werden, dauert die Berechnung der Signatur in Software 2,5ms und erzeugt somit 25% CPU-Last, wobei zur Übertragung der Signatur bei vollständigem MAC eine Buslast von 83% oder bei partiellem MAC mit eingeschränkter Authentifizierung eine Buslast von 20% erreicht wird. Gemäß dem ersten Beispiel A aus Fig. 3 ergibt sich mit Datenpufferung bzw. Datensammlung und ebenfalls mit einer AES 128 Signatur 127 für acht Sensorwerte gemeinsam, d.h. 8 Task-Zykluszeiten, wobei der Sensorwert alle 10ms erfasst wird, folgendes: die Bestimmung der Signatur 127 dauert lediglich 2.5ms / 8 = 0.3ms pro Zeitschritt t bei einer erzeugten CPU-Last von 3%, wobei zum Senden der Signatur 127 pro Zeitschritt t eine Buslast von 83% / 8 = 10% bei vollständig übertragenem MAC erreicht wird.

### BEZUGSZEICHENLISTE

- 100: Fahrzeug
- 105: erste Funktionseinheit
- 110: zweite Funktionseinheit
- 112: Aussendeeinrichtung
- 115: Datenpakete
- 120: Vorrichtung
- 122: Sammeleinrichtung
- 124: Datenpuffer
- 125: Datenblock
- 126: Bestimmungseinrichtung
- 127: Signatur
- 128: Sendeeinrichtung
- 129: Schnittstelle
- 200: Verfahren zum Betreiben
- 210: Schritt des Sammelns
- 220: Schritt des Bestimmens
- 230: Schritt des Sendens
- 300: Zeitablaufdiagramm
- 310: Sammelzeitdauer
- 320: Bestimmungszeitdauer
- 330: Sendezeitdauer
- 310-1, 310-2, 330- 3: weitere Sammelzeitdauer
- 320-1, 310-2: weitere Bestimmungszeitdauer
- 330-1, 330-2: weitere Sendezeitdauer
- A: erstes Beispiel
- B: zweites Beispiel
- C: drittes Beispiel
- t: Zeitschritte

## Patentansprüche

1. Verfahren (200) zum Betreiben einer Datenkommunikation zwischen Funktionseinheiten (105, 110) für ein Fahrzeug (100), wobei das Verfahren (200) folgende Schritte aufweist:
Sammeln (210) einer vordefinierten Anzahl von durch eine Sendeeinheit (110) an eine Empfangseinheit (105) ausgesandten Datenpaketen (115) in einem Datenpuffer (124) der Sendeeinheit (110), um einen Datenblock (125) zu erzeugen, wobei in jedem vordefinierten Zeitschritt (t) ein Datenpaket (115) ausgesandt wird, wobei die Datenpakete (115) über eine vordefinierte, die Summe der Zeitschritte (t) der vordefinierten Anzahl von Datenpaketen (115) des Datenblocks (125) andauernde Sammelzeitdauer (310) hinweg gesammelt werden;
Bestimmen (220) einer Signatur (127) zum Authentifizieren des Datenblocks (125), wobei die Signatur (127) über eine vordefinierte, mehrere Zeitschritte (t) andauernde Bestimmungszeitdauer (320) hinweg bestimmt wird; und
Senden (230) der Signatur (127) in mehreren Teilen über eine vordefinierte Sendezeitdauer (330) hinweg von der Sendeeinheit (110) an die Empfangseinheit (105), wobei pro Zeitschritt (t) ein Teil der Signatur (127) gesendet wird,
wobei der Schritt (210) des Sammelns, der Schritt (220) des Bestimmens und der Schritt (230) des Sendens so ausgeführt werden, dass eine Summe der Sammelzeitdauer (310), der Bestimmungszeitdauer (320) und der Sendezeitdauer (330) kleiner als eine vorgegebene System-Fehlertoleranzzeit ist.

2. Verfahren (200) gemäß Anspruch 1, wobei der Schritt (210) des Sammelns, der Schritt (220) des Bestimmens und der Schritt (230) des Sendens so ausgeführt werden, dass eine Summe aus der Sammelzeitdauer (310) und der Bestimmungszeitdauer (320) kleiner oder gleich einer Summe aus der Bestimmungszeitdauer (320) und der Sendezeitdauer (330) ist.

3. Verfahren (200) gemäß einem der vorangegangenen Ansprüche, wobei der Schritt (210) des Sammelns, der Schritt (220) des Bestimmens und der Schritt (230) des Sendens so ausgeführt werden, dass eine Summe aus der Bestimmungszeitdauer (320) und der Sendezeitdauer (330) kleiner als das Zweifache der Sammelzeitdauer (310) ist.

4. Verfahren (200) gemäß einem der vorangegangenen Ansprüche, wobei der Schritt (220) des Bestimmens und der Schritt (230) des Sendens so ausgeführt werden, dass die Bestimmungszeitdauer (320) und die Sendezeitdauer (330) gleich lang sind.

5. Verfahren (200) gemäß einem der Ansprüche 1 bis 3, wobei der Schritt (220) des Bestimmens und der Schritt (230) des Sendens so ausgeführt werden, dass die Bestimmungszeitdauer (320) und die Sendezeitdauer (330) unterschiedlich lang sind.

6. Verfahren (200) gemäß einem der vorangegangenen Ansprüche, wobei der Schritt (210) des Sammelns, der Schritt (220) des Bestimmens und der Schritt (230) des Sendens so ausgeführt werden, dass die Bestimmungszeitdauer (320) höchstens so lang wie die Sammelzeitdauer (310) ist und/oder die Sendezeitdauer (330) höchstens so lang wie die Sammelzeitdauer (310) ist.

7. Verfahren (200) gemäß einem der vorangegangenen Ansprüche, wobei im Schritt (230) des Sendens die Signatur (127) für einen bereits gesendeten Datenblock (125) und der aktuelle Datenblock (125) gemeinsam gesendet werden, wobei pro Zeitschritt (t) ein Teil der Signatur (127) zusammen mit mindestens einem der Datenpakete (115) des Datenblocks (125) verschränkt gesendet wird.

8. Verfahren (200) gemäß einem der vorangegangenen Ansprüche, wobei im Schritt (230) des Sendens die Signatur (127) und ein Datenpaket (115) gesendet werden, wobei pro Zeitschritt (t) ein Teil der Signatur (127) bestimmt über den Datenblock (125) zusammen mit einem Datenpaket (115) gesendet wird.

9. Verfahren (200) gemäß einem der vorangegangenen Ansprüche, wobei der Schritt (210) des Sammelns, der Schritt (220) des Bestimmens und der Schritt (230) des Sendens zyklisch wiederholt ausgeführt werden, wobei über eine vordefinierte weitere Sammelzeitdauer (310-1, 310-2, 310-3) hinweg weitere Datenpakete (115) gesammelt werden, um einen weiteren Datenblock (125) zu erzeugen, wobei über eine vordefinierte weitere Bestimmungszeitdauer (320-1, 320-2) hinweg eine weitere Signatur (127) zum Authentifizieren des weiteren Datenblocks (125) bestimmt wird, wobei während einer vordefinierten weiteren Sendezeitdauer (330-1, 330-2) die weitere Signatur (127) in mehreren Teilen von der Sendeeinheit (110) an die Empfangseinheit (105) gesendet wird.

10. Verfahren (200) gemäß Anspruch 9, wobei der Schritt (210) des Sammelns, der Schritt (220) des Bestimmens und der Schritt (230) des Sendens so ausgeführt werden, dass die weitere Sammelzeitdauer (310-1, 310-2, 310-3) direkt auf die Sammelzeitdauer (310) folgt und/oder die weitere Sammelzeitdauer (310-1, 310-2, 310-3) die Bestimmungszeitdauer (320) zeitlich überlappt und/oder die Sendezeitdauer (330) partiell zeitlich überlappt.

11. Vorrichtung (120), die eingerichtet ist, um die Schritte des Verfahrens (200) gemäß einem der vorangegangenen Ansprüche in entsprechenden Einheiten (122, 124, 126, 128) auszuführen und/oder anzusteuern.

12. Funktionseinheit (110) für ein Fahrzeug (100), wobei die Funktionseinheit (110) eine Vorrichtung (120) gemäß Anspruch 11 aufweist, wobei die Funktionseinheit (110) als ein Steuergerät oder als ein Sensor oder als ein Aktor ausgeführt ist.

13. Computerprogramm, das dazu eingerichtet ist, die Schritte des Verfahrens (200) gemäß einem der Ansprüche 1 bis 10 auszuführen und/oder anzusteuern.

14. Maschinenlesbares Speichermedium, auf dem das Computerprogramm nach Anspruch 13 gespeichert ist.

## Claims

1. Method (200) for operating data communication between functional units (105, 110) for a vehicle (100), wherein the method (200) has the following steps:
collecting (210) a predefined number of data packets (115) transmitted by a transmitting unit (110) to a receiving unit (105) in a data buffer (124) of the transmitting unit (110) in order to generate a data block (125), wherein a data packet (115) is transmitted in each predefined time step (t), wherein the data packets (115) are collected over a predefined collection period (310) that lasts for the sum of the time steps (t) of the predefined number of data packets (115) of the data block (125);
determining (220) a signature (127) for authenticating the data block (125), wherein the signature (127) is determined over a predefined determination period (320) that lasts for multiple time steps (t); and
transmitting (230) the signature (127) in multiple parts over a predefined transmission period (330) from the transmitting unit (110) to the receiving unit (105), wherein one part of the signature (127) is transmitted per time step (t),
wherein the collecting step (210), the determining step (220) and the transmitting step (230) are performed such that a sum of the collection period (310), the determination period (320) and the transmission period (330) is less than a predetermined system fault tolerance time.

2. Method (200) according to claim 1, wherein the collecting step (210), the determining step (220) and the transmitting step (230) are performed such that a sum of the collection period (310) and the determination period (320) is less than or equal to a sum of the determination period (320) and the transmission period (330).

3. Method (200) according to any one of the preceding claims, wherein the collecting step (210), the determining step (220) and the transmitting step (230) are performed such that a sum of the determination period (320) and the transmission period (330) is less than twice the collection period (310).

4. Method (200) according to any one of the preceding claims, wherein the determining step (220) and the transmitting step (230) are performed such that the determination period (320) and the transmission period (330) are of equal length.

5. Method (200) according to any one of claims 1 to 3, wherein the determining step (220) and the transmitting step (230) are performed such that the determination period (320) and the transmission period (330) are of different lengths.

6. Method (200) according to any one of the preceding claims, wherein the collecting step (210), the determining step (220) and the transmitting step (230) are performed such that the determination period (320) is at most as long as the collection period (310) and/or the transmission period (330) is at most as long as the collection period (310).

7. Method (200) according to any one of the preceding claims, wherein in the transmitting step (230), the signature (127) for a data block (125) already transmitted and the current data block (125) are transmitted together, wherein a part of the signature (127) interleaved with at least one of the data packets (115) of the data block (125) is transmitted per time step (t).

8. Method (200) according to any one of the preceding claims, wherein in the transmitting step (230), the signature (127) and a data packet (115) are transmitted, wherein a part of the signature (127) determined via the data block (125) is transmitted together with a data packet (115) per time step (t).

9. Method (200) according to any one of the preceding claims, wherein the collecting step (210), the determining step (220) and the transmitting step (230) are repeated cyclically, wherein over a predefined further collection period (310-1, 310-2, 310-3), further data packets (115) are collected to generate a further data block (125), wherein a further signature (127) for authenticating the further data block (125) is determined over a predefined further determination period (320-1, 320-2), wherein the further signature (127) is transmitted in multiple parts from the transmitting unit (110) to the receiving unit (105) during a predefined further transmission period (330-1, 330-2).

10. Method (200) according to claim 9, wherein the collecting step (210), the determining step (220) and the transmitting step (230) are performed such that the further collection period (310-1, 310-2, 310-3) directly follows the collection period (310) and/or the further collection period (310-1, 310-2, 310-3) temporally overlaps the determination period (320) and/or partially temporally overlaps the transmission period (330).

11. Device (120) configured to execute and/or control the steps of the method (200) according to any one of the preceding claims in corresponding units (122, 124, 126, 128).

12. Functional unit (110) for a vehicle (100), wherein the functional unit (110) has a device (120) according to claim 11, wherein the functional unit (110) is configured as a control device or as a sensor or as an actuator.

13. Computer program configured to execute and/or control the steps of the method (200) according to any one of claims 1 to 10.

14. Machine-readable storage medium on which the computer program according to claim 13 is stored.

## Revendications

1. Procédé (200) de fonctionnement d'une communication de données entre des unités fonctionnelles (105, 110) pour un véhicule (100), dans lequel le procédé (200) présente les étapes suivantes :
collecte (210) d'un nombre prédéfini de paquets de données (115) envoyés par une unité d'envoi (110) à une unité de réception (105) dans un tampon de données (124) de l'unité d'envoi (110) pour générer un bloc de données (125), dans lequel à chaque palier de temps (t) prédéfini, un paquet de données (115) est envoyé, dans lequel les paquets de données (115) sont collectés sur une période de collecte prédéfinie (310) durant le nombre des paliers de temps (t) du nombre prédéfini de paquets de données (115) du bloc de données (125) ;
détermination (220) d'une signature (127) pour l'authentification du bloc de données (125), dans lequel la signature (127) est déterminée sur une période de détermination (320) prédéfinie s'étalant sur plusieurs paliers de temps (t) ; et
envoi (230) de la signature (127) en plusieurs parties sur une période d'envoi (330) prédéfinie de l'unité d'envoi (110) vers l'unité de réception (105), dans lequel une partie de la signature (127) est envoyée par palier de temps (t),
dans lequel l'étape (210) de la collecte, l'étape (220) de la détermination et l'étape (230) de l'envoi sont réalisées de sorte qu'une somme de la période de collecte (310), de la période de détermination (320) et de la période d'envoi (330) est inférieure à un temps de tolérance aux pannes du système prédéterminé.

2. Procédé (200) selon la revendication 1, dans lequel l'étape (210) de la collecte, l'étape (220) de la détermination et l'étape (230) de l'envoi sont réalisées de sorte qu'une somme de la période de collecte (310) et de la période de détermination (320) est inférieure ou égale à la somme de la période de détermination (320) et de la période d'envoi (330).

3. Procédé (200) selon l'une quelconque des revendications précédentes, dans lequel l'étape (210) de la collecte, l'étape (220) de la détermination et l'étape (230) de l'envoi sont réalisées de sorte qu'une somme de la période de détermination (320) et la période d'envoi (330) est inférieure à deux fois la période de collecte (310).

4. Procédé (200) selon l'une quelconque des revendications précédentes, dans lequel l'étape (220) de la détermination et l'étape (230) de l'envoi sont réalisées de sorte que la période de détermination (320) et la période d'envoi (330) sont de même longueur.

5. Procédé (200) selon l'une quelconque des revendications 1 à 3, dans lequel l'étape (220) de la détermination et l'étape (230) de l'envoi sont réalisées de sorte que la période de détermination (320) et la période d'envoi (330) sont de longueur différente.

6. Procédé (200) selon l'une quelconque des revendications précédentes, dans lequel l'étape (210) de la collecte, l'étape (220) de la détermination et l'étape (230) de l'envoi sont réalisées de sorte que la période de détermination (320) est au plus aussi longue que la période de collecte (310) et/ou la période d'envoi (330) est au plus aussi longue que la période de collecte (310).

7. Procédé (200) selon l'une quelconque des revendications précédentes, dans lequel lors de l'étape (230) de l'envoi, la signature (127) d'un bloc de données (125) déjà envoyé et le bloc de données actuel (125) sont envoyés ensemble, dans lequel une partie de la signature (127) est envoyée entrelacée par palier de temps (t) avec au moins un des paquets de données (115) du bloc de données (125).

8. Procédé (200) selon l'une quelconque des revendications précédentes, dans lequel à l'étape (230) de l'envoi, la signature (127) et un paquet de données (115) sont envoyés, dans lequel une partie de la signature (127) déterminée par palier de temps (t) par l'intermédiaire du bloc de données (125) est envoyée avec un paquet de données (115).

9. Procédé (200) selon l'une quelconque des revendications précédentes, dans lequel l'étape (210) de la collecte, l'étape (220) de la détermination et l'étape (230) de l'envoi sont réalisées de manière cyclique et répétée, dans lequel sur une période de collecte prédéfinie (310-1, 310-2, 310-3) supplémentaire, des paquets de données (115) supplémentaires sont collectés pour générer un bloc de données (125) supplémentaire, dans lequel, sur une durée de détermination prédéfinie (320-1, 320-2) supplémentaire, une signature (127) supplémentaire est déterminée pour authentifier le bloc de données (125) supplémentaire, dans lequel, pendant une durée d'envoi prédéfinie (330-1, 330-2) supplémentaire, la signature (127) supplémentaire est envoyée en plusieurs parties de l'unité d'envoi (110) à l'unité de réception (105).

10. Procédé (200) selon la revendication 9, dans lequel l'étape (210) de la collecte, l'étape (220) de la détermination et l'étape (230) de l'envoi sont réalisées de sorte que la période de collecte (310-1, 310-2, 310-3) supplémentaire suit directement la période de collecte (310) et/ou la période de collecte (310-1, 310-2, 310-3) supplémentaire chevauche temporellement la période de détermination (320) et/ou chevauche temporellement en partie la période d'envoi (330).

11. Dispositif (120) qui est configuré pour mettre en oeuvre et/ou commander les étapes du procédé (200) selon l'une quelconque des revendications précédentes dans des unités correspondantes (122, 124, 126, 128).

12. Unité fonctionnelle (110) pour un véhicule (100), dans lequel l'unité fonctionnelle (110) présente un dispositif (120) selon la revendication 11, dans lequel l'unité fonctionnelle (110) est conçue en tant que dispositif de commande ou en tant que capteur ou en tant qu'actionneur.

13. Programme informatique qui est configuré pour exécuter et/ou commander les étapes du procédé (200) selon l'une quelconque des revendications 1 à 10.

14. Support de stockage lisible par machine sur lequel le programme informatique selon la revendication 13 est enregistré.
